Europäisches Patentamt

European Patent Office

Office européen des brevets

(11) Veröffentlichungsnummer: **0 082 859**
**B1**

# (12) EUROPÄISCHE PATENTSCHRIFT

(45) Veröffentlichungstag der Patentschrift:
**17.09.86**

(21) Anmeldenummer: **82902059.3**

(22) Anmeldetag: **22.06.82**

(86) Internationale Anmeldenummer:
**PCT/DE 82/00131**

(87) Internationale Veröffentlichungsnummer:
**WO 83/00124 (20.01.83 Gazette 83/2)**

(51) Int. Cl.⁴: **B 60 T 17/22** // B60T8/88

(54) **ANTIBLOCKIERREGELSYSTEM.**

(30) Priorität: **02.07.81 DE 3126102**

(43) Veröffentlichungstag der Anmeldung:
**06.07.83 Patentblatt 83/27**

(45) Bekanntmachung des Hinweises auf die Patenterteilung:
**17.09.86 Patentblatt 86/38**

(84) Benannte Vertragsstaaten:
**DE FR GB SE**

(56) Entgegenhaltungen:
**DE - A - 2 614 016
DE - B - 2 701 159
FR - A - 2 346 190
FR - A - 2 463 705
GB - A - 2 057 798
US - A - 3 275 384**

(73) Patentinhaber: **ROBERT BOSCH GMBH, Postfach 50,
D-7000 Stuttgart 1 (DE)**

(72) Erfinder: **FRIES, Herbert, Namborner Strasse 21,
D-6692 Oberthal (DE)**
Erfinder: **GERSTENMAIER, Jürgen, Galbergstrasse 20,
D-6903 Neckargmund (DE)**
Erfinder: **KIRCHER, Stefan, Blumenstrasse 15,
D-7140 Ludwigsburg (DE)**
Erfinder: **KOCH-DÜCKER, Jürgen,
Robert-Bosch-Strasse 3, D-6803 Edingen 1 (DE)**

## Beschreibung

Die Erfindung betrifft ein Antiblockierregelsystem für die getrennte Überwachung der Räder eines Fahrzeugs, bestehend aus vier identisch aufgebauten, aus Sensoren, Auswerteschaltung und Bremssteuereinheit bestehenden Regelkanälen für den Radbremsdruck sowie pro Kanalpaar aus einer Sicherheitsschaltung mit Zeitgliedern zur Überwachung von Ansprechzeiten und einer Einrichtung zur Prüfung der Funktionsfähigkeit des Antiblockierregelsystems in zeitlichen Abständen in einem Testzyklus dadurch, dass von jeder Prüfeinrichtung in das zugehörige Kanalpaar ein gleiches Prüfsignal eingekoppelt wird und dass von jeder Prüfeinrichtung die Auswirkungen dieser Prüfsignale an vorgegebenen, sich entsprechenden Stellen der Kanalpaare hinsichtlich einer ungefähren Übereinstimmung des zeitlichen Auftretens und/oder des Werts des auftretenden Signals verglichen werden und dabei je eine Signalfolge gebildet wird, und dass ein Schalt- und/oder Warnsignal erzeugt wird, wenn vorgegebene Ansprechzeiten überschritten werden und verglichene Signale voneinander abweichen.

In der DE-OS 2 614 016 ist ein zweikanaliger Antiblockierregler beschrieben, bei dem von Zeit zu Zeit, insbesondere bei Stillstand, ein Prüfsignal in die Kanäle eingekoppelt wird, und bei dem an verschiedenen, sich entsprechenden Positionen der Kanäle die daraus resultierenden Signale verglichen werden. Stimmen die Signale nicht überein, so wird ein Warn- und/oder Schaltsignal erzeugt. Es ist dort auch eine Zeitglieder enthaltende Sicherheitsschaltung für beide Kanäle vorgesehen, die gesondert überprüft werden kann, wozu gegebenenfalls die Zeitkonstanten der Zeitglieder verkürzt werden.

Aus der DE-AS 2 701 159 ist es für einen zweikanaligen Antiblockierregler auch bekannt, auf eine Sicherheitsschaltung mit Zeitgliedern zu verzichten, auch während der Fahrt in vorgegebenen Zeitabständen ein Prüfsignal in die Kanäle einzukoppeln, zwei Prüfschaltungen vorzusehen und in diesen jeweils die an verschiedenen Positionen der beiden Kanäle entstehenden Signale zu vergleichen, wobei bei Nichtübereinstimmung das Warn- und/oder Schaltsignal erzeugt wird. Hierdurch wird auch bei Ausfall einer Prüfschaltung ein Fehler erkannt.

Der Erfindung liegt die Aufgabe zugrunde, einem Antiblockierregler mit vier Regelkanälen eine Sicherheits- und Prüfeinrichtung zuzuordnen, die eine redundante Überwachung des Systems erlaubt, bei der nicht während der Fahrt Prüfsignale eingekoppelt werden müssen, und die mit relativ geringem Aufwand auskommt.

Diese Aufgabe wird durch die im Anspruch 1 angegebenen Merkmale gelöst.

Bei der Erfindung wird die Sicherheitsschaltung mit Zeitgliedern beibehalten und das in der DE-OS 2 614 016 beschriebene Prinzip auf einen Vierkanalregler in vorteilhafter Weise übertragen. Dabei werden trotz der vier Kanäle nur zwei Sicherheitsschaltungen benötigt und diese überwachen die Kanäle redundant. Gemäss einer Weiterbildung der Erfindung werden mit der gleichen Überwachungsschaltung, die die Reglersignale vergleicht, im Testzyklus auch die in der Sicherheitsschaltung erzeugten Signale verglichen. Hierzu werden die Zeitkonstanten der Sicherheitsschaltung vorzugsweise verkürzt, um den Testzyklus nicht zu lange ausdehnen zu müssen.

Besonders einfach wird die Überwachungsschaltung, wenn bei digitaler Ausbildung der Regelkanäle jeweils die vom einen Kanalpaar zur Sicherheitsschaltung des anderen Kanalpaares zu übertragenden digitalen Signale in den Übertragungswegen zuerst in serielle Signale gewandelt und dann wieder in Parallelsignale rückgewandelt werden. Dann braucht man mit der Überwachungsschaltung nur noch die einzelnen Signalteile der seriellen Signale auf Übereinstimmung zu vergleichen. Dies gilt auch für den Vergleich der Sicherheitsschaltungssignale bei Überprüfung der Sicherheitsschaltung.

Anhand der Zeichnung wird ein Ausführungsbeispiel der Erfindung erläutert. Es zeigen:

Fig. 1 ein Antiblockierregler erfindungsgemässer Ausbildung,

Fig. 2 die bei diesem verwendbare Überwachungsschaltung.

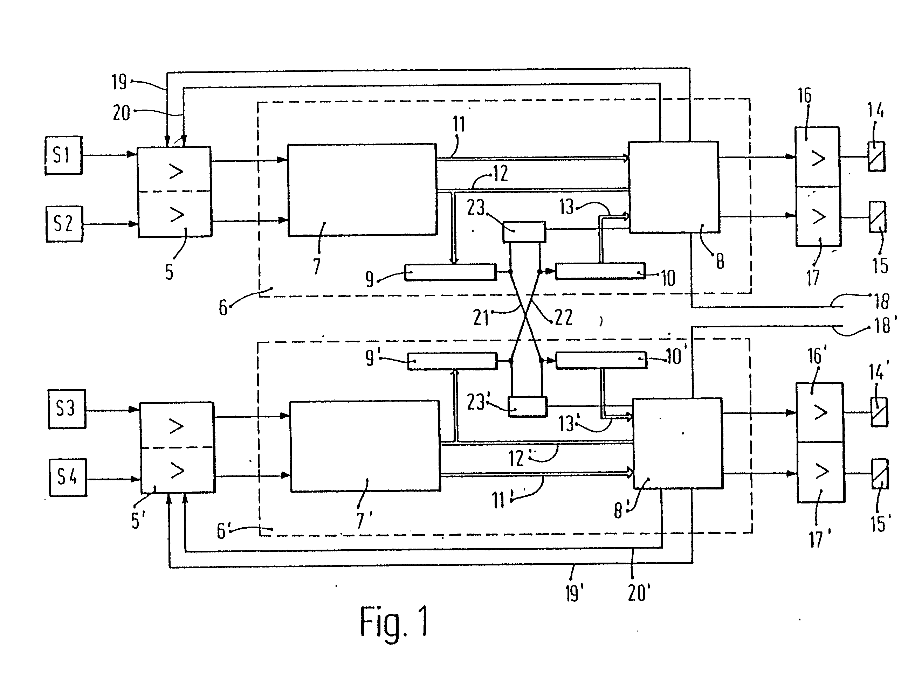

Der in Fig. 1 dargestellte Antiblockierregler besteht aus vier Messwertgebern $S_1$–$S_4$, die der Radgeschwindigkeit entsprechende Signale liefern. Die Signale der Geber $S_1$ und $S_2$ werden über eine zweikanalige Verstärkereinheit 5 einem Block 6 zugeführt, der einen zweikanaligen Regler 7, eine Sicherheitsschaltung 8, einen Datenwandler 9, einen zweiten Datenwandler 10 und Verbindungskanäle 11–13 aufweist. Die Teile 7–13 arbeiten digital, d.h., über die Verbindungskanäle 11–13 werden digitale Worte parallel übertragen. Diese digitalen Worte beinhalten auch die Ventilansteuersignale, die die Sicherheitsschaltung durchlaufen und dort im Fehlerfall gesperrt werden können. Diese Ventilansteuersignale aktivieren über Verstärker 16 bzw. 17 die Bremsdrucksteuereinrichtung, die hier der Einfachheit halber pro Kanal als Ventil 14 bzw. 15 dargestellt ist.

Für die Messwertgeber $S_3$ und $S_4$ sind den Teilen 5–17 entsprechende Teile in identischer Ausbildung vorgesehen und mit 5'–17' bezeichnet.

Treten an den Messwertgebern $S_1$–$S_4$ Signale auf, die eine Blockierneigung der zugehörigen Räder anzeigen, so erzeugen die Regler 7 und 7' digitale Signale, die als parallel dargestellte digitale Worte über das Leitungssystem 11 bzw. 11' zur Sicherheitsschaltung 8 bzw. 8' gelangen. Die Sicherheitsschaltungen 8 und 8', die Zeitglieder aufweisen, überwachen diese Steuersignale, aber eventuell über die Leitungssysteme 11 und 11' auch an verschiedenen Positionen erzeugte, in den Reglern 7 und 7' erzeugte Signale auf zu langes Andauern und gegebenenfalls andere Unmöglichkeiten. Bei Auftreten solcher Zustände geben die Sicherheitsschaltungen über Leitung 18 bzw. 18' ein Warn- und/oder Abschaltsignal ab. Was in einem System mit Zeitgliedern überwacht werden kann, kann z.B. aus der DE-OS 2 232 034 entnommen werden.

Die Signale des Reglers 7 bzw. 7' gelangen über das Leitungssystem 12 bzw. 12' auch zum Datenwandler 9 bzw. 9', werden dort jeweils in ein serielles Signal umgesetzt und dann über Leitungen 21 und 22 zum Datenwandler 10 bzw. 10' übertragen und nach Rückumsetzung in ein paralleles Signal über das Leitungssystem 13 bzw. 13' der Sicherheitsschaltung 8 bzw. 8' zugeführt und von dieser nur auf Unmöglichkeiten überwacht. Damit überwachen beide Sicherheitsschaltungen 8 und 8' die Signale beider Regler, so dass auch bei Ausfall einer Sicherheitsschaltung eine auftretende Unmöglichkeit (Fehler) erkannt wird.

Die Sicherheitsschaltungen 8 bzw. 8' beinhalten auch die Prüfeinrichtungen, die von Zeit zu Zeit bei Fahrzeughalt eine Überprüfung der Anlage durchführen. Hierzu werden über die Leitungen 19 bzw. 19' die Messwertgeber $S_1$–$S_4$ abgeschaltet und über Leitungen 20 bzw. 20' in alle Kanäle ein gleiches Prüfsignal eingekoppelt, das so aufgebaut ist, dass alle Zweige der Regler überprüft werden können. Die an den verschiedenen, sich entsprechenden Stellen jedes Kanalpaares entstehenden Signale werden (entsprechend DE-OS 2 614 016) nacheinander durch die Einwirkung der Prüfeinrichtung (in 8 bzw. 8') miteinander verglichen.

Die dabei in den Leitungssystemen 12 und 12' auftretenden digitalen Signale werden über die Leitungen 21 und 22 seriell übertragen. Zur Überprüfung sind an diese Vergleichsschaltungen 23 bzw. 23' angeschaltet, die die übertragenen Signale Bit für Bit miteinander auf Gleichheit untersuchen. Nur wenn die übertragenen Signale Bit für Bit übereinstimmen, ist sichergestellt, dass kein Fehler im gesamten System vorliegt.

Zusätzlich wird noch in gleicher Weise die Funktionstüchtigkeit der Sicherheitsschaltungen 8 und 8' überprüft; dazu werden deren Zeitglieder in ihren Zeitkonstanten verkürzt, was bei Verwendung von Zählern als Zeitglieder durch Taktfrequenzerhöhung geschehen kann; dann werden ihnen Signale zugeführt, die die Zeitkonstanten überschreiten, so dass Abschaltsignale entstehen. Diese gelangen über die Leitungssysteme 12 und 12' auf die Leitungen 21 und 22 und können somit durch die Vergleichsschaltungen 23 bzw. 23' ebenfalls Bit für Bit auf Identität überwacht werden, und dies redundant. Zusätzlich können die Vergleichsschaltungen 23 und 23' auf Funktionstüchtigkeit dadurch überwacht werden, dass man in sie einen Fehler eingibt und überwacht, ob sie dann auch ansprechen.

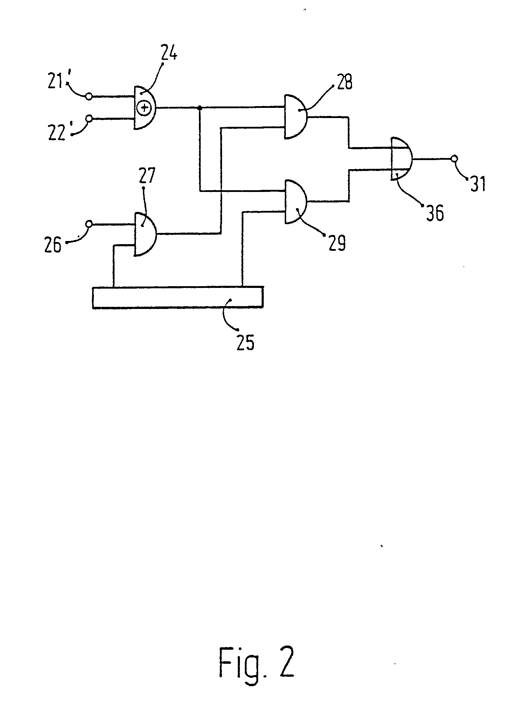

Eine für das Ausführungsbeispiel der Fig. 1 mögliche und ausreichende Ausbildung der Überwachungsschaltung 23 zeigt Fig. 2.

An den Klemmen 21' und 22' sind die Leitungen 21 und 22 der Fig. 1 angeschlossen. Das Exklusiv-ODER-Gatter 24 hat Ausgangssignal, wenn die jeweils gleichzeitig anliegenden Signale nicht übereinstimmen, was bedeutet, dass ein Fehler vorliegen muss. Während eines ersten aus dem Block 25 kommenden, über das UND-Gatter 27 weitergegebenen Steuertakts, werden die bei Einkoppeln des Prüfsignals in den Reglern 7 und 7' gebildeten digitalen Worte miteinander Bit für Bit verglichen. Ein Nichtübereinstimmen der Eingangssignale des Gatters 24 lässt ein Signal über ein UND-Gatter 28 zum ODER-Gatter 30 gelangen, dessen an der Klemme 31 anstehendes Ausgangssignal das Warn- und/oder Schaltsignal darstellt. Es sei noch erwähnt, dass das Gatter 27 durch das an der Klemme 26 zugeführte Abschaltsignal für die Messwertgeber (Leitungen 19, 19') vorbereitet wird.

Wie oben bereits gesagt, können auch die mit Zeitgliedern bestückten Zweige der Sicherheitsschaltungen dadurch geprüft werden, dass diese Zweige – nach Umschaltung der Zeitglieder – zum Ansprechen gebracht werden und dann wieder an sich entsprechenden Stellen entstehende Signale miteinander verglichen werden. Dies geschieht hier in einem sich anschliessenden Steuertakt, in dem vom Block 25 das UND-Gatter 29 vorbereitet wird und bei Unterschiedlichkeit der bei 21' und 22' eingespeisten Signale über diese UND-Gatter 29 das Fehlersignal an Klemme 31 erzeugt wird. Gegebenenfalls können anschliessend noch andere Signale der Anlage überprüft werden. Da die beiden Sicherheitsschaltungen auch während der Fahrt innerhalb des Testzyklus identische Eingangssignale der Regler erhalten, können beliebige Knotenpunkte der Sicherheitsschaltung laufend auf Identität überwacht werden.

**Patentansprüche**

1. Antiblockierregelsystem für die getrennte Überwachung der Räder eines Fahrzeugs, bestehend aus vier identisch aufgebauten, aus Sensoren (S1–S4), Auswerteschaltung und Bremssteuereinheit bestehenden Regelkanälen (7, 7') für den Radbremsdruck sowie pro Kanalpaar aus einer Sicherheitsschaltung (8, 8') mit Zeitgliedern zur Überwachung von Ansprechzeiten und einer Einrichtung zur Prüfung der Funktionsfähigkeit des Antiblockierregelsystems in zeitlichen Abständen in einem Testzyklus dadurch, dass von jeder Prüfeinrichtung in das zugehörige Kanalpaar ein gleiches Prüfsignal eingekoppelt wird und dass von jeder Prüfeinrichtung die Auswirkungen dieser Prüfsignale an vorgegebenen, sich entsprechenden Stellen der Kanalpaare hinsichtlich einer ungefähren Übereinstimmung des zeitlichen Auftretens und/oder des Werts des auftretenden Signals verglichen werden und dabei je eine Signalfolge gebildet wird, und dass ein Schalt- und/oder Warnsignal erzeugt wird, wenn vorgegebene Ansprechzeiten überschritten werden und verglichene Signale voneinander abweichen, dadurch gekennzeichnet, dass beide Sicherheitsschaltungen mit beiden Reglerpaaren (7, 7') verbunden sind und mittels Zeitgliedern die Ansprechzeiten in allen Kanälen überwachen und dass wenigstens eine Überwachungsschaltung (23, 23') vorgesehen ist, die während des Testzyklus die Übereinstimmung der beiden für jedes Kanalpaar getrennt erzeugten Signalfolgen hinsichtlich des zeitlichen Auftretens und/oder des Werts des auftretenden Signals vergleicht, wobei auch bei Nichtübereinstimmung dieser verglichenen Signalfolgen ein Warn- und/oder Schaltsignal erzeugt wird.

2. Antiblockierregelsystem nach Anspruch 1, dadurch gekennzeichnet, dass während des Testzyklus die Zeitglieder in der Sicherheitsschaltung (8, 8') auf kleinere Zeitkonstanten umschaltbar sind und dass das Prüfsignal auch Elemente enthält, die alle Pfade der Sicherheitsschaltung (8, 8') ansprechen lassen, und dass die Überwachungsschaltung (23, 23') auch mit sich entsprechenden Stellen der Sicherheitsschaltung (8, 8') zum Zwecke der Überprüfung der Sicherheitsschaltung (8, 8') auf das Entstehen gleicher Reaktion an sich entsprechenden Stellen verbunden ist.

3. Antiblockierregelsystem nach Anspruch 1 oder 2, dadurch gekennzeichnet, dass bei digitaler Ausbildung der Auswerteschaltung und Sicherheits- und Prüfeinrichtung für die Übertragung der Signale vom einen zum anderen Kanalpaar bzw. zur zugehörigen Sicherheitsschaltung (8, 8') in jedem Übertragungspfad Wandlereinrichtungen (9, 9'; 10, 10') zur Umwandlung der einzelnen parallelen digitalen Worte in serielle Signale und Rückumwandlung in parallele digitale Worte eingeschaltet sind und dass die Überwachungsschaltung (23, 23') die einzelnen Signalteile der seriellen Signale auf Übereinstimmung vergleicht.

**Claims**

1. Antiblock control system for the separate monitoring of the wheels of a vehicle, consisting of four identically designed control channels (7, 7'), consisting of sensors (S1–S4), evaluation circuit and brake control unit, for the wheel brake pressure and, per channel pair, of a safety circuit (8, 8') with timing elements for the monitoring of response times and a device for checking the operability of the antiblock control system at time intervals in a test cycle in such a way that from each test device an identical test signal is coupled into the associated channel pair and that from each test device the effects of these test signals are compared at given, corresponding points of the channel pairs with regard to an approximate agreement of the timing and/or the value of the signal occurring and thereby a signal sequence is formed in each case, and that a switching and/or warning signal is generated when given response times are exceeded and compared signals deviate from each other, characterized in that both safety circuits are connected with both controller pairs (7, 7') and, by means of timing elements, monitor the response times in all channels and in that at least one monitoring circuit (23, 23') is provided which compares during the test cycle the agreement of the two signal sequences separately generated for each channel pair with regard to the timing and/or the value of the signal occurring, a warning and/or switching signal being generated even when these compared signal sequences do not agree.

2. Antiblock control system according to Claim 1, characterized in that during the test cycle the timing elements in the safety circuit (8, 8') are switchable to smaller time constants and in that the test signal also includes elements which induce response of all paths of the safety circuit (8, 8') and in that the monitoring circuit (23, 23') is also connected to corresponding points of the safety circuit (8, 8') for the purpose of monitoring the safety circuit (8, 8') for the occurrence of the same reaction at corresponding points.

3. Antiblock control system according to Claim 1 or 2, characterized in that, with digital design of the evaluation circuit and safety and testing device, for transmission of the signals from one to the other channel pair or to the associated safety circuit (8, 8'), converter devices (9, 9'; 10, 10') are interposed in each transmission path for conversion of the individual parallel digital words into serial signals and re-conversion into parallel digital words, and in that the monitoring circuit (23, 23') compares the individual signal parts of the serial signals for agreement.

**Revendications**

1. Système de réglage antiblocage pour surveiller séparément les roues d'un véhicule, système constitué de quatre canaux de réglage (7, 7') de constitution identique, comprenant des détecteurs (S1 à S4), un circuit d'exploitation, et une unité de commande de frein, pour régler la pression de freinage des roues, le système comportant également par paires de canaux, un circuit de sécurité (8, 8') avec des organes de temporisation pour surveiller les temps de réponse, et avec un dispositif permettant de contrôler l'aptitude au fonctionnement du système antiblocage à des intervalles de temps prévus dans un cycle de contrôle, du fait qu'un signal de contrôle identique est introduit par chaque dispositif de contrôle dans la paire de canaux afférente, et que les effets de ces signaux de contrôle, à des emplacements prédéfinis et se correspondant des paires de canaux, sont comparés par chaque dispositif de contrôle en ce qui concerne une coïncidence approximative des valeurs des signaux apparaissant et/ou des instants de leur apparition, et une succession de signaux étant alors formée, et un signal de commutation et/ou d'avertissement étant obtenu lorsque des temps de réponse prédéfinis sont dépassés et que les signaux ainsi comparés diffèrent l'un de l'autre, système caractérisé en ce que deux circuits de sécurité sont reliés aux deux paires de canaux de réglage (7, 7') et surveillent, au moyen d'organes de temporisation, les temps de réponse dans tous les canaux, tandis qu'il est prévu au moins un circuit de surveillance (23, 23') qui, pendant le cycle de contrôle, compare la coïncidence des deux successions de signaux engendrés séparément pour chaque paire de canaux, en ce qui concerne la valeur du signal apparaissant et/ou le moment de son apparition, un signal d'avertissement et/ou de commutation étant également engendré lorsqu'il n'y a pas coïncidence des successions de signaux ainsi comparés.

2. Système de réglage antiblocage selon la revendication 1, caractérisé en ce que pendant le cycle de contrôle, les organes de temporisation dans le circuit de sécurité (8, 8') sont susceptibles d'être commutés sur des constantes de temps plus réduites et que le signal de contrôle contient aussi des éléments qui font réagir toutes les voies du circuit de sécurité (8, 8'), et le circuit de surveillance (23, 23') étant également relié avec des emplacements se correspondant du circuit de sécurité (8, 8') dans le but de vérifier ce circuit de sécurité (8, 8') en ce qui concerne l'apparition d'une réaction identique en ces emplacements se correspondant.

3. Système de réglage antiblocage selon la revendication 1 ou 2, caractérisé en ce que, dans le cas d'une réalisation numérique du circuit d'exploitation et du dispositif de sécurité de contrôle, pour la transmission des signaux de l'une des paires de canaux à l'autre ou bien au circuit de sécurité correspondant (8, 8'), des dispositifs convertisseurs (9, 9'; 10, 10') sont insérés dans chaque voie de transmission pour convertir les différents mots numériques parallèles en séries de signaux, et pour la conversion inverse en mots numériques parallèles, le circuit de surveillance (23, 23') comparant, tant à la coïncidence, les différentes parties de séries de signaux.

Fig. 1

0 082 859

Fig. 2